# EUROPEAN PATENT APPLICATION

(11) **EP 4 362 438 A1**
(43) Date of publication of application: **01.05.2024**
(21) Application number: 23765664.0
(22) Date of filing: 13.01.2023
(51) Int. Cl.: H04M 1/18

(54) **PROTECTIVE SHELL HAVING MAGNETICALLY ATTRACTIVE STAND**

(30) Priority: 11.03.2022 CN 202220562453 U; 17.03.2022 CN 202220591759 U; 01.08.2022 CN 202222026765 U; 02.09.2022 CN 202222350018 U; 05.12.2022 CN 202223250397 U
(71) Applicant: Shenzhen Lanhe Technologies Co., Ltd., Shenzhen, Guangdong 518000 (CN)
(72) Inventor: YANG, Hua, Shenzhen, Guangdong 518000 (CN); CHEN, Yong, Shenzhen, Guangdong 518000 (CN); LUO, Liren, Shenzhen, Guangdong 518000 (CN); LIU, Jianhua, Shenzhen, Guangdong 518000 (CN); YANG, Zhengfeng, Shenzhen, Guangdong 518000 (CN); LIANG, Zhijun, Shenzhen, Guangdong 518000 (CN); TANG, Churong, Shenzhen, Guangdong 518000 (CN); QIU, Haisong, Shenzhen, Guangdong 518000 (CN); YE, Zhuoting, Shenzhen, Guangdong 518000 (CN)
(74) Representative: Cabinet Chaillot
(86) International application number: PCT/CN2023/072207
(87) International publication number: WO 2023/169084

(57) **Abstract**

The present disclosure provides a protective case with a magnetically attractive support, comprising a back plate, a side frame and a magnetic support assembly. The side frame is connected to the back plate to define a receiving chamber for accommodating an electronic device. The magnetic support assembly is capable of rotating relative to the back plate or the side frame so as to support the protective case. The magnetic support assembly is configured to be magnetically attractive, so that the support assembly has both a support function and a magnetically attraction function, and both functions do not affect each other, thereby solving the problem that a magnetic attraction function and a support function of an existing protective case would affect each other.

## Description

### TECHNICAL FIELD

The present disclosure relates to the technical field of accessories of electronic devices, especially relates to a protective case with a magnetically attractive support.

### BACKGROUND

As we all know, smartphones and tablets are electronic products which are common consumer products in people's lives.

In order to facilitate charging and remove constraints of wired charging, smartphones and tablets have been equipped with wireless charging units inside them. Thus, with the help of the wireless charging unit, external wireless chargers can wirelessly charge the smartphones and tablets. Later, in order to ensure a stable connection between the smartphones or tablets and external accessories (such as card cases, wireless chargers, etc.), magnetic rings have been embedded into the smartphones or tablets, and similar magnetic rings have also built into external accessories. Smartphones/tablets and external accessories can be easily attracted together through the magnetic rings to thereby achieve a relative fixing between the smartphones/tablets and the external accessories, which greatly facilitates usage.

Since many users are accustomed to putting protective cases on their smartphones/tablets, the thickness of the protective case inevitably affects the magnetic attraction force between the external accessories and the smartphones/tablets, which results in the external accessories not being securely attached to the smartphone/tablet. Therefore, it has become a common way to install a magnetic ring on the protective case to magnetically fix external accessories and the protective case.

This is relatively simple for ordinary protective cases since ordinary protective cases have no other functional components and the arrangement of the magnetic ring does not affect the function of the protective case. However, for protective cases with stands, the built-in magnetic ring will affect the function of the stand to a certain extent. Since the magnetic ring occupies a large area of the back plate of the protective case, the stand can only be arranged at an edge of the back plate of the protective case, which makes the smartphone/tablet unstable and easy to slide due to the center of gravity of the smartphone/tablet is shifted when the stand is standing. Moreover, the setting of the stand will also affect the magnetic attraction effect between the external accessories and the protective cases to a certain extent.

### SUMMARY

In view of this, the present application provides a protective case with a magnetically attractive support. The protective case includes a back plate, a side frame and a magnetic support assembly. The side frame is located around the periphery of the back plate. The magnetic support assembly is capable of rotating relative to the back plate or the side frame to support the protective case.

In one embodiment, the magnetic support assembly is made of magnets or materials that can be magnetically attracted by magnets.

In one embodiment, the magnetic support assembly includes a support member and a magnetic member which are fixedly or detachably connected to each other.

In the protective case with a magnetically attractive support provided by this application, the magnetic support assembly is made of magnets or materials that can be magnetically attracted by magnets, or the magnetic support assembly comprises two parts: a support part and a magnetic part, so that the magnetic support assembly has both a support function and a magnetic attraction function. In scenarios where a support function is needed, the support function can be achieved by rotating the magnetic support member. In scenarios where a wireless charger needs to be fixed or the protective case need to be fixed on a car holder, attraction can be achieved through the magnetic attraction function of the magnetic support assembly.

Furthermore, by arranging the magnetic support assembly in the middle area of the back plate, the support stability of the support member can be ensured, and at the same time, the support assembly is set in a ring shape, which perfectly avoids the wireless charging area of the mobile phone and avoids impacts on the wireless charging function of mobile phones caused by the support member.

### BRIEF DESCRIPTION OF THE DRAWINGS

FIG. 1 is a structure diagram of a protective case with a magnetically attractive support according to a first embodiment of the present disclosure.
FIG. 2 is a cross-sectional view of the protective case of FIG. 1, taken along the length direction of the protective case.
FIG. 3 is an exploded view of a magnetic support assembly of the protective case of FIG. 1.
FIG. 4 is an exploded view of the protective case of FIG. 1.
FIG. 5 a structure diagram of the protective case with a magnetic support assembly in an unfolded state.
FIG. 6 is another exploded view of the protective case of FIG. 1, viewed from another aspect.
FIG. 7 is an exploded view of another magnetic support assembly of the protective case of FIG. 1.
FIG. 8 another exploded view of the magnetic support assembly of FIG. 7, viewed from another aspect.
FIG. 9 is a perspective view of a protective case with a magnetically attractive support according to a second embodiment of the present disclosure.
FIG. 10 is a schematic diagram of the protective case of FIG. 9 in a supporting state.
FIG. 11 is a schematic diagram of the protective case of FIG. 9 in another supporting state.
FIG. 12 is an exploded view of the protective case of FIG. 10.
FIG. 13 is an exploded view of the magnetic support assembly of the protective case of FIG. 9.
FIG. 14 is a cross-sectional view of the protective case of FIG. 9, taken along the width direction of the protective case.
FIG. 15 is a perspective view of a magnetic support assembly of a protective case with a magnetically attractive support according to a third embodiment of the present disclosure.
FIG. 16 is a schematic diagram of a fixing member of the magnetic support assembly of FIG. 15.
FIG. 17 is an exploded view of the magnetic support assembly of FIG. 15.
FIG. 18 illustrates the magnetic support assembly of FIG. 15 in a supporting state.
FIG. 19 is a schematic diagram of a support member of the magnetic support assembly of FIG. 15.
FIG. 20 illustrates the protective case according to the third embodiment of the present application in a supporting state.
FIG. 21 illustrates the protective case according to the third embodiment of the present application in a stowed state.
FIG. 22 is a perspective view of a protective case with a magnetically attractive support according to a fourth embodiment of the present disclosure.
FIG. 23 is an exploded view of the protective case of FIG. 22.
FIG. 24 is another exploded view of the protective case of FIG. 22, viewed from another aspect.
FIG. 25 is an exploded view of a magnetic support assembly of the protective case of FIG. 22.
FIG. 26 illustrates the protective case of FIG. 22 in a supporting state.
FIG. 27 is a perspective view of a protective case with a magnetically attractive support according to a fifth embodiment of the present disclosure.
FIG. 28 illustrates the protective case of FIG. 27 in a stowed state.
FIG. 29 is an exploded view of the protective case of FIG. 27.
FIG. 30 is an exploded view of a magnetic support assembly of the protective case of FIG. 27.
FIG. 31 is another exploded view of the magnetic support assembly of FIG. 30, viewed from another aspect.
FIG. 32 is a perspective view of a protective case with a magnetically attractive support according to a sixth embodiment of the present disclosure.
FIG. 33 is an exploded view of a magnetic support assembly of the protective case of FIG. 32.
FIG. 34 is a perspective view of a protective case with a magnetically attractive support according to a seventh embodiment of the present disclosure.
FIG. 35 is an exploded view of the protective case of FIG. 34.
FIG. 36 is an enlarged view of a portion of the protective case of FIG. 35.
FIG. 37 is a perspective view of a protective case with a magnetically attractive support according to an eighth embodiment of the present disclosure.
FIG. 38 illustrates the protective case of FIG. 37 in a supporting state.

### DETAILED DESCRIPTION

Before describing the embodiments in detail, it should be understood that, the present application is not limited to the detailed structure or arrangement of elements described below or in the accompanying drawings. The present application may be embodied in other ways. Furthermore, it will be understood that the phraseology and terminology used herein is for descriptive purposes only and not by way of limitation. The phrases "comprising," "including," "having," and the like used in the present application are intended to encompass the items listed thereafter, equivalents thereof, and other additional items. In particular, when "an element" is described, the application is not intended to limit the number of the element to one, but may also include a plurality of elements.

### Embodiment 1

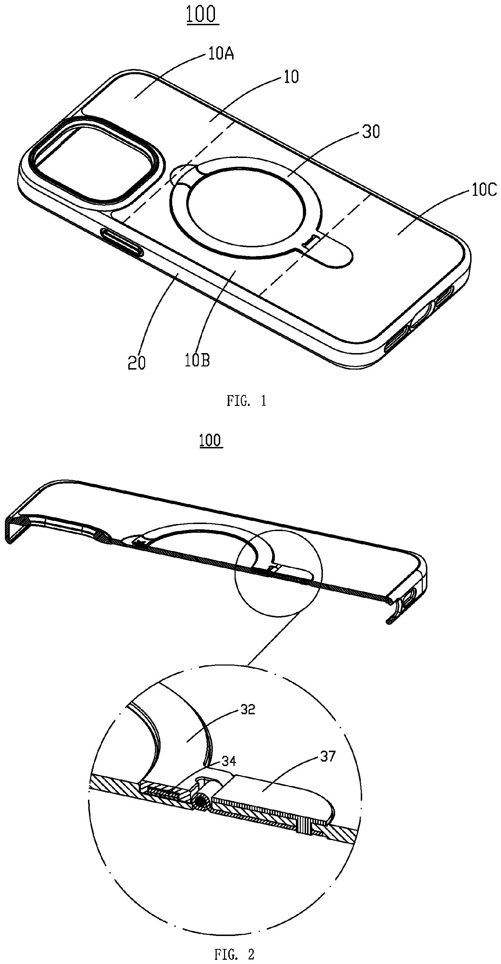

Referring to FIG. 1, a protective case with a magnetically attractive support 100 is configured to fit on an electronic device and cooperate with an external wireless charger to wirelessly charge the electronic device. The protective case 100 includes a backplate 10, a frame 20 and a magnetic support assembly 30. The side frame 20 is surrounded around the backplate 10 to cooperatively define a chamber for accommodating the electronic device. The magnetic support assembly 30 is rotatable relative to the backplate 10 or the side frame 20 to support the case 100.

The magnetic support assembly 30 may be made of magnets or a material which can be attracted by magnets. For example, the magnetic support assembly 30 may be made of iron. In an occasion where a magnetic attraction force is needed, the magnetic support assembly 30 may align with a magnet of an accessory so that the magnetic support assembly 30 and the accessory are attracted together.

Alternatively, as shown in FIG. 2, the magnetic support assembly 30 includes a support member 32 and a magnetic member 34. By arranging the magnetic member 34 on the support member 32, the magnetic support assembly 30 has a capability of generating magnetic attraction. The magnetic member 34 may be fixedly or detachably connected with the support member 32. By a detachable connection, the magnetic member 34 may be assembled with the support member 32 freely. When a magnetic attraction function is needed, the magnetic member 34 may be assembled with the support member 32. When a magnetic attraction function is not needed, the magnetic member 34 may be disassembled from the support member 32. Usage of the magnetic support assembly 30 is flexible. Furthermore, when the electronic device is accommodated in the chamber, the magnetic member 34 is substantially aligned with a magnetic part of the electronic device, which prevents other components of the electronic device from being affected by the magnetic member 34.

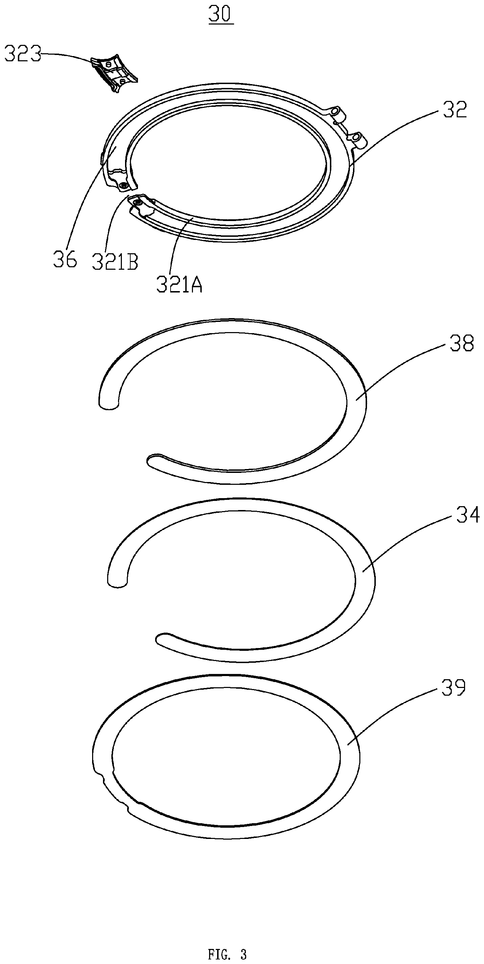

Referring to FIG. 3, in one embodiment, the support member 32 is ring-shaped. The support member 32 has a receiving portion configured for receiving the magnetic member 34. In this embodiment, the receiving portion is a receiving groove 36. The magnetic member 34 is ring-shaped and received in the receiving groove 36. In other embodiments, the receiving portion may be a receiving hole or other receiving structures which can receive the magnetic member 34 therein. The support member 32 comprises a non-insulating part 321 and an insulating part 323. The non-insulating part 321 is ring-shaped and comprises an arcuate section 321A and an open section 321B. The insulating part 323 is arranged at the open section 321B and opposite ends of the insulating part 323 are respectively connected to the arcuate section 321A. The arcuate section 321A comprises a first end and a second end which are respectively head and tail ends of the arcuate section 321A. The first end and the second end are spaced from each other to form the open section 321B therebetween. The insulating part 323 is arranged at the open section 321B and connected to the first and second ends of the arcuate section 321A, which results in the support member 32 becoming a closed ring structure as a whole. Optionally, the insulation part 323 includes plastic parts. Optionally, the insulating part 323 can also be made of wood or ceramics.

Normally, in order to ensure the strength and service life of the support member 32, the support member 32 is generally made of metal or alloy materials. When metal foreign objects are mixed into the energy transmission area of the wireless charging system, part of the electric energy is consumed by the metal due to the eddy current effect of the metal, which affects the wireless power transmission power and efficiency to a certain extent. What is more serious is that the metal generates a large amount of heat due to the eddy current effect, which will cause wireless chargers and electronic devices such as mobile phones to become hot, thus affecting charging efficiency. Especially when the support member 32 is annular-shaped, the annular-shaped support member 32 limits the eddy current within the support member, which has a greater impact on the wireless power transmission power and efficiency. By providing the insulating part 323, the insulating part 323 provides an opening to release eddy current for the annular-shaped support member 32, thereby reducing the eddy current effect caused by the support member 32 being made of metal or alloy.

Furthermore, the surface of the insulating part 323 is flush with the surface of the arcuate section 321A, so that the addition of the insulating part 323 will not affect the flatness of the surface of the entire support member 32 or its magnetic attraction effect with other accessories. In other embodiments, the inner ring of the arcuate section 321A has a first side surface, and the insulating part 323 has a second side surface. The first side surface and the second side surface are in the same arc-shaped surface, which can improve the touch feeling.

Optionally, the magnetic member 34 includes at least one of an iron sheet and a magnet ring. In this embodiment, the magnetic member 34 is a magnet ring which may include a plurality of magnetic members arranged at intervals to form an annular shape. In one embodiment, the magnetic support assembly 30 further includes an adhesive layer 38 disposed in the receiving groove 36, and the magnetic member 34 is sticked in the receiving groove 36 through the adhesive layer 38. Optionally, the adhesive layer 38 is formed by curing at least one of 3M glue or liquid glue. Furthermore, the magnetic support assembly 30 further includes a decorative layer 39. The decorative layer 39 is disposed in the receiving groove 36 and covers the magnetic member 34 to provide a shelter for the magnetic member 34 and enhance the aesthetic appearance. Optionally, the decorative layer 39 is made of a Mylar sheet.

Referring also to FIG. 1, the back plate 10 can be divided into a first region 10A, a middle region 10B and a second region 10C arranged in sequence along the length direction of the back plate 10. The magnetic support assembly 30 includes a stowed state. When the magnetic support assembly 30 is in the stowed state, the magnetic support assembly is located in the middle area 10B. At the same time, the magnetic support assembly 30 also includes a support state. When the magnetic support assembly 30 is in the support state, using the back plate 10 as a projection surface, when the opening angle of the magnetic support assembly 30 is less than or equal to 90 degrees, the front projection of the magnetic support assembly 30 is located in the middle area 10B; when the opening angle of the magnetic support assembly 30 is greater than or equal to 90 degrees, the orthographic projection of the magnetic support assembly 30 is located in the second area 10C. In other embodiments, if the rotating center of the magnetic support assembly 30 is located at the junction of the first area 10A and the middle area 10B, when the opening angle of the magnetic support assembly 30 is greater than or equal to 90 degrees, the orthographic projection of the magnetic support assembly 30 is located in the first area 10A.

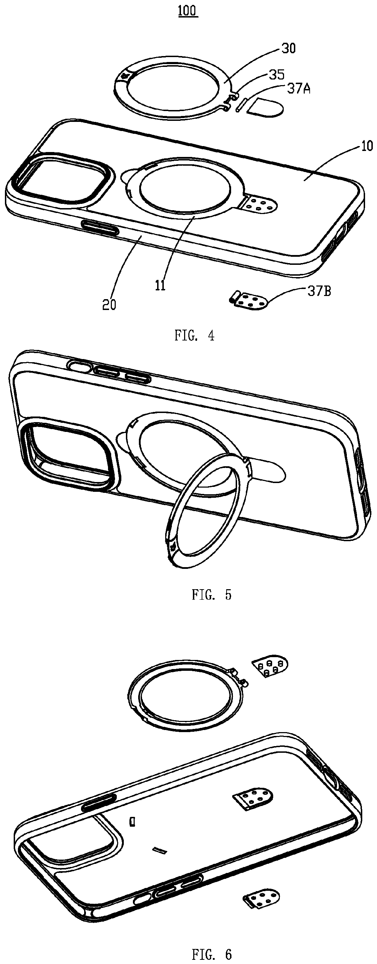

Please refer to FIGS. 4 to 6, in one embodiment, the magnetic support assembly 30 further includes a fixing member 37. The fixing member 37 is fixedly connected to the back plate 10, and the magnetic support assembly 30 is rotatably connected with the fixing member 37 via the connecting portion 35. The fixing member 37 and the insulating part 323 are located at opposite ends of the annular section 321A in the diameter direction thereof.

In one embodiment, the insulating part 323 and the connecting portion 35 are arranged oppositely, so that the magnetic support assembly 30 can be rotated through operating the insulating part 323. Optionally, the rotatable angle of the magnetic support assembly 30 is in a range of 0-180°, wherein the optimal rotation angle of the magnetic support assembly 30 is in a range of 0-135°. Furthermore, an operating portion can also be formed on the insulating part 323 to facilitate opening the magnetic support assembly 30 during use.

In one embodiment, the back plate 10 is formed with a receiving slot 11, and the fixing member 37 is disposed in the receiving slot 11. When the magnetic support assembly 30 is in the closed state, the support member 32 and the magnetic member 34 are both located in the receiving slot 11. By providing the receiving slot 11, when the magnetic support assembly 30 is in the closed state, the surface of the magnetic support assembly 30 is flush with the back plate 10, which can ensure to the greatest extent that unevenness of the surface of the back plate 10 caused by the presence of the magnetic support assembly 30 is avoided during wirelessly charging.

In one embodiment, the magnetic member 34 and the magnetic support assembly 30 have an optimal size range to ensure optimal function. The thickness of the magnetic member 34 is in a range of 0.3 mm to 4 mm, and the optimal thickness is 0.7 mm, the inner diameter of the magnetic member is in a range of 40mm∼52mm, the optimal inner diameter is 46mm, the outer diameter of the magnetic member is in a range of 40mm~52mm, the optimal outer diameter is 54mm. The thickness of the magnetic support assembly 30 is in a range of 1mm~5mm, the preferred thickness is 1.65mm, the inner diameter of the support member 32 is in a range of 38mm~50mm, and the optimal inner diameter is 44mm. The outer diameter of the support member 32 is in a range of 50mm~62mm, and the optimal outer diameter is 56.7mm. It should be understood that the inner diameter of the magnetic member 34 is smaller than its outer diameter, and the inner diameter of the support member 32 is also smaller than its outer diameter.

In one embodiment, a magnetic coupling area is formed and surrounded by the magnetic support assembly 30, wherein the distance between the center of the magnetic coupling area and the top edge of the back plate 10 is 77 mm to 97 mm; or, the distance between the center of the magnetic coupling area and the side edges of the back plate 10 is 40 mm to 52 mm, which makes the magnetic support assembly be approximately located at the center of the back plate. When the protective case is mounted on the mobile phone, the magnetic support assembly can offset from the wireless charging area and does not affect wireless charging.

In one embodiment, at least a portion of the magnetic support assembly 30 can rotate relative to the back plate 10 to form an included angle with the back plate 10, and the included angle ranges from 0 to 135°.

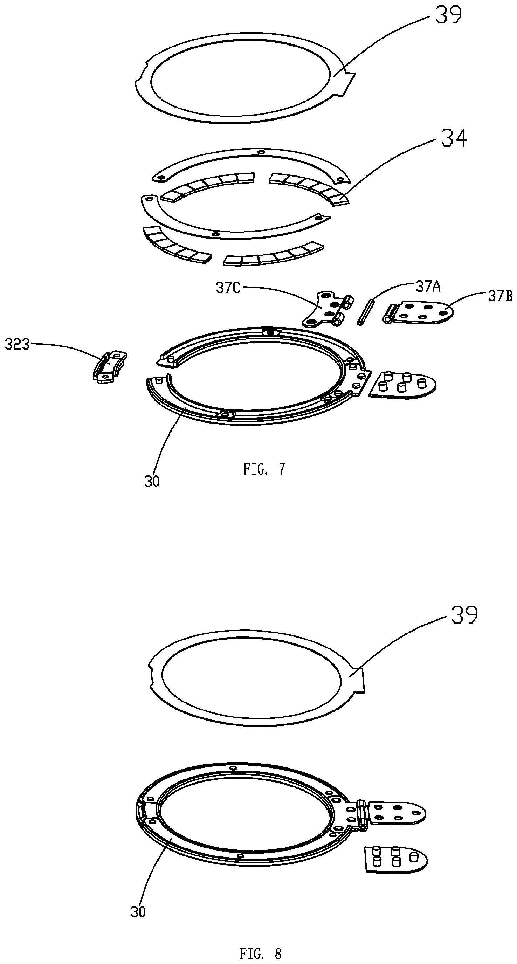

In one embodiment, as shown in FIG. 7, the magnetic member 34 includes a plurality of magnetic members which are arranged in an annular or arc shape at intervals. In the illustrated embodiment, a plurality of magnetic members is arranged in an arc shape at intervals, and four arc-shaped magnetic members 30 are spaced arranged in an annular shape to increase the magnetic force of the magnetic members 30.

Referring to FIG. 7, in the embodiment as shown in FIG. 7, the fixing member 37 includes a rotating element 37A and a first fixing element 37B, wherein the first fixing element 37B is fixedly connected to the back plate 10 or the side frame 20, and the support member 32 is rotatably connected to the first fixing element 37B through the rotating element 37A, so that the support member 32 can rotate relative to the back plate 10 or the side frame 20 to achieve a support function. Furthermore, the first fixing element 37B is located inside the back plate 10 or the side frame 20.

In one embodiment, the fixing member 37 further includes a second fixing element 37C which is fixedly connected to the support member 32. The first fixing element 37B is rotatably connected to the second fixing element 37C through the rotating element 37A, so that the support member 32 can rotate relative to the back plate 10 or the side frame 20 to achieve a support function. Furthermore, the second fixing element 37C is located inside the back plate 10 or the side frame 20. By disposing the first fixing element 37B and the second fixing element 37C at the inner and outer sides of the back plate 10 or the side frame 20 respectively, the overall thickness of the fixing member 37 can be reduced to a certain extent. When the support member 32 is in the closed state, the support member 32 is flush with or slightly protrudes from the back plate 10, which can bring a better user experience in use. The support member 32 is flush with the back plate 10, which can reduce the influence of the support member 32 on the appearance and feel of the protective case to a certain extent.

### Embodiment 2

Compared with Embodiment 1, the difference between the protective case 100 of this embodiment and the protective case 100 of Embodiment 1 is that the fixing member 37 of embodiment 2 is fixedly connected to the side frame 20. The magnetic member 34 is formed with an opening for disconnecting the annular magnetic member 34.

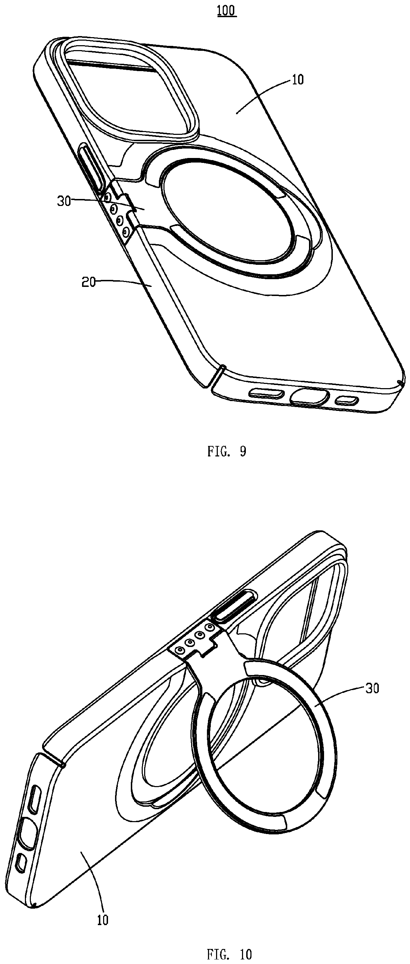

As shown in FIG. 9, the protective case 100 includes a back plate 10, a side frame 20 and a magnetic support assembly 30 installed on the side frame 20. The side frame 20 can be made of materials such as silicone, PC, TPU, or a combination thereof. The back plate 10 comprises an inner surface and an outer surface opposite to each other. The protective case 100 has a receiving chamber for accommodating a mobile terminal formed at one side of the inner surface of the bottom wall. The mobile terminal can be various portable electronic devices, such as mobile phones or tablet computers. This application takes a mobile phone as an example of the mobile terminal for explanation.

In some embodiments, the protective case 100 further includes at least one side wall extending from the bottom wall, wherein the side wall and the bottom wall cooperatively form an accommodation space for accommodating the mobile terminal. In the illustrated embodiment, the protective case 100 includes four side walls, which cooperate with the bottom wall to form the accommodation space for accommodating the mobile terminal (eg, a mobile phone).

The magnetic support assembly 30 can rotate among multiple positions relative to the protective case 100, and the multiple positions include a folded position and at least one unfolded position. FIG. 9 shows the magnetic support assembly 30 in the folded position where the magnetic support assembly 30 is received in the back plate 10 to avoid causing obstruction to operating mobile phones (for example, placing the mobile phone on a table, placing the mobile phone in a pocket, putting the mobile phone on a wireless charger to charge, etc.).

Figure 10 shows the magnetic support assembly 30 as a mobile phone support in an unfolded position where the magnetic support assembly 30 is at an angle with respect to the back plate 10 so that the mobile phone can be supported on a plane at an angle.

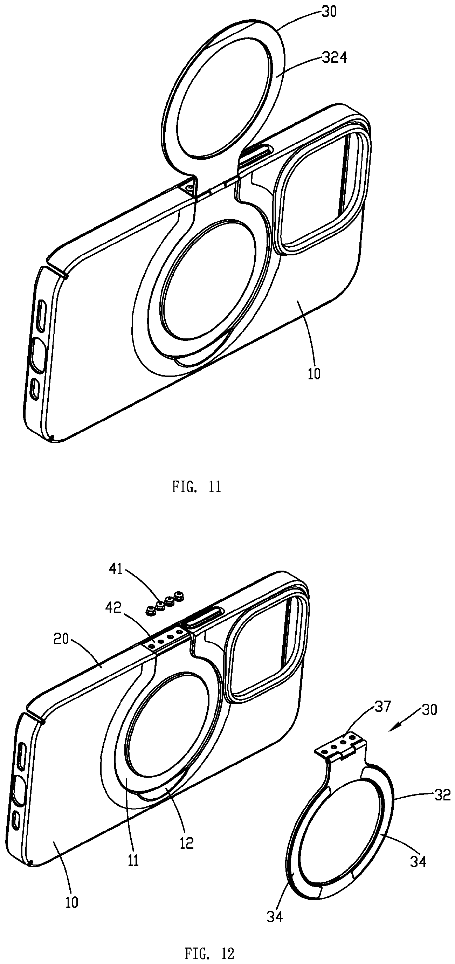

Figure 11 shows the the magnetic support assembly 30 as a pull ring in an unfolded position where the magnetic support assembly is rotated 180 degrees to be coplanar or parallel to the back plate 10. It should be understood that the above-described are two examples for illustrating the unfolded positions. In other embodiments, the magnetic support assembly can be rotated to other unfolded position and form other angles with respect to the back plate 10.

As shown in FIG. 12, in the illustrated embodiment, the magnetic support assembly 30 is fixedly mounted on the outside of the side frame 20 through rivets 41. The side frame 20 is formed with a recessed mounting portion 42 for riveting the magnetic support assembly 30. In other embodiments, the magnetic support assembly 30 can also be mounted on the back plate 10.

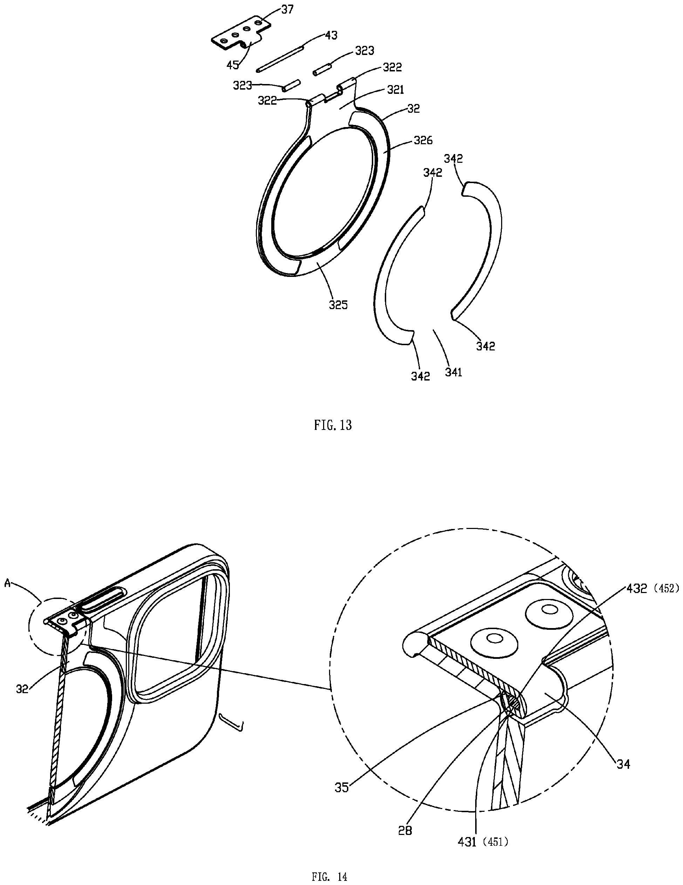

Please also refer to FIG. 13. In the illustrated embodiment, the magnetic support assembly 30 includes a rotating shaft 43, a fixing member 37 rotatably connected to the rotating shaft 43, and a support member 32 non-rotatably connected to the rotating shaft 43. The fixing member 37 is fixedly mounted to the mounting portion 42 of the side frame 20 through rivets 41, thereby mounting the magnetic support assembly 30 to the protective case 100. The thickness of the fixing member 37 is equivalent to the depth of the recess of the mounting part 42. Utilizing the rotating shaft 43, the support member 32 can rotate relative to the fixing member 37 and therefore relative to the protective case 100 between the aforementioned folded position and at least one unfolded position. At different positions, the support member 32 functions as a mobile phone support or a pull ring. The fixing member 37 is generally made of hardware material with higher strength.

A pivot portion 45 is formed on one side of the fixing member 37. The pivot portion 45 is rotatably sleeved on the rotating shaft 43, specifically, sleeved on the middle section of the rotating shaft 43. Referring to FIG. 13, in the illustrated embodiment, the pivot portion 45 is formed by rolling the side edge of the fixing member 37 into a tubular shape. After being rolled to form the tubular pivot portion 45, the end of the side edge of the fixing member 37 and the inner surface of the pivot portion 45 are in a disconnected state. The disconnected state refers to a state of unfixed joint, and the end may or may not be in contact with the inner wall surface.

Please also refer to FIG. 14 which shows an automatic return mechanism formed between the pivot portion 45 and the rotating shaft 43. The outer circumferential surface of the portion of the rotating shaft 43 located in the pivot portion 45 has a first flat surface 431 and a first arc surface 432 connected to the first plane 431. The inner surface of the pivot portion 45 is provided with a second flat surface 451 and a second arc surface 452. When the support member 32 is in the folded position, the first flat surface 431 of the rotating shaft 43 fits and contacts the second flat surface 451 of the pivot part 45, and the first arc surface 432 of the rotating shaft 43 fits and contacts the second arc surface 452 of the pivot part 45.

When no external force is exerted to open the support member 32, the rotating shaft 43 and the pivot portion 45 are fixed relative to each other to thereby maintain the support member 32 in the folded position. When an user manually operates the support member 32 to rotate the support member 32 away from the folded position (that is, when he support member 32 rotates to the unfolded position), the portion of the rotating shaft located in the pivot portion 45 pushes the inner surface of the pivot portion 45 when rotating, to spread the end of the side edge of the fixing member 37 and expand the inner diameter of the pivot portion 45 to thereby allow rotation between the pivot portion 45 and the rotating shaft 43. When the user rotates the support member 32 from the unfolded position back to the folded position, the user only needs to manually rotate the support member 32 in the initial stage, and then the part of the fixing member 37 near the end of the side edge of the fixing member 37 elastically squeezes the rotating shaft 43, so that the support member 32 can automatically return to the folded position and maintain in the folded position.

Please refer to FIGS. 12 and 13 together. The support member 32 is provided with a connecting portion 321 close to the fixing member 37. The connecting portion 321 is fixedly connected to the rotating shaft 43 so that relative rotation between the connecting portion 321 and the rotating shaft 43 does not occur. In the illustrated embodiment, the connecting portion 321 includes at least one connecting tube 322, which is sleeved on the rotating shaft 43. A damping material is provided between the connecting tube 322 and the rotating shaft 43 to increase the friction between the connecting tube 322 and the rotating shaft 43 so that the connecting tube 322 and the rotating shafts 43 are fixed relative to each other and cannot rotate relative to each other. Therefore, the support member 32 cannot rotate relative to the rotating shaft 43. In the illustrated embodiment, the connecting part 321 is provided with two connecting tubes 322, which are located on opposite sides of the fixing member 37 and sleeved on opposite ends of the rotating shaft 43. The damping material is a damping tube 323, and one damping tube 323 is sandwiched between each connecting tube 322 and the rotating shaft 43.

Referring again to FIGS. 11 and 13, the support member 32 has an annular inner surface 324 (see FIG. 11) and an annular outer surface 325 opposite to each other. In the folded position, the annular inner surface 324 of the support member 32 abuts against the outer surface of the back plate 10. The back plate 10 is formed with a receiving slot 11 that matches the support member 32 in shape. In the folded position, the support member 32 is received in the receiving slot 11, and the annular outer surface 325 of the support member 32 is flush with the outer surface of the back plate 10. The back plate 10 is formed with a depression 12 on the outside of the receiving slot 11 as a gripping position. The depression 12 is in communication with the receiving slot 11 to facilitate the user to open the support member 32 from the folded position. In the illustrated embodiment, the depression 12 is arranged on the periphery of the receiving slot 11 and opposite to the mounting portion 42.

The support member 32 is non-magnetically conductive and is generally made of alloy material, such as aluminum alloy, zinc alloy, etc. Magnetic members 34 are provided on the annular outer surface 325. The magnetic members 34 are distributed along the circumferential direction of the annular outer surface 325 and form notches 341 in the circumferential direction. The notches 341 extends through the magnetic members 34 in the radial direction. In the illustrated embodiment, two magnetic members 34 are provided. Each magnetic member 34 is in the shape of a curved bar. More specifically, the magnetic member 34 may be an iron sheet with two opposite circumferential ends 342 in the circumferential direction. Adjacent circumferential ends 342 of the two magnetic members 34 are spaced with a certain distance, forming the two notches 341.

The annular outer surface 325 is provided with the magnetic member 34 in order to fix the mobile terminal installed in the protective case 100 to other objects via magnetic attraction force. One of the application scenarios is magnetically fixed on a wireless charger for wireless charging. Generally speaking, a wireless charger is provided with a transmitting coil and a magnet located around the transmitting coil, and a mobile terminal such as a mobile phone is provided with a receiving coil for wireless charging. The position of the magnetic member 34 on the support member 32 is such arranged that when the support member 32 is in the folded position, the magnetic member 34 is located radially the periphery of the receiving coil of the mobile phone installed in the protective case 100. When wireless charging is performed, the receiving coil of the mobile phone is aligned with the transmitting coil of the wireless charger, and the magnetic member 34 is aligned with the magnet of the wireless charger. The magnetic attraction force between the magnetic member 34 and the magnet position the mobile phone on the wireless charger. The arrangement of the above-mentioned notch 341 enables the magnetic member 34 to effectively reduce the interference induction and heat generation during the wireless charging process under the condition that the magnetic positioning function can still be achieved, thereby avoiding or reducing the impact of the magnetic member 34 on wireless charging.

In the illustrated embodiment, the annular outer surface 325 is provided with a mounting groove 326, and the magnetic member 34 is installed in the mounting groove 326. The outer surface of the magnetic member 34 does not exceed the annular outer surface 325, and may be lower than the annular outer surface 325 or flush with the annular outer surface 325. The magnetic member 34 is, for example, adhered and fixed in the mounting groove 326. The magnetic member 34 is installed in the mounting groove 326, and the outer surface of the magnetic member 34 does not exceed the annular outer surface 325. Therefore, arrangement of the magnetic member 34 will not increase the distance between the receiving coil of the mobile phone and the transmitting coil of the wireless charger, thereby avoiding reduction in charging efficiency caused by increased distance.

Although the illustrated embodiment shows an example of two magnetic members 34, in other embodiments, only one strip-shaped magnetic conductive member may be provided on the annular outer surface 325. The notch is formed between opposite two circumferential ends of the single strip-shaped magnetic conductive member. In some embodiments, more than two magnetic conductive members may be provided, and a notch radially extending through the magnetic conductive member is formed between adjacent circumferential ends of any two adjacent magnetic conductive members.

### Embodiment 3

Compared with Embodiment 1, the difference between the protective case 100 provided of this embodiment and the protective case of Embodiment 1 is that the fixing member 37 is also annular, and the fixing member 37 is provided with an opening.

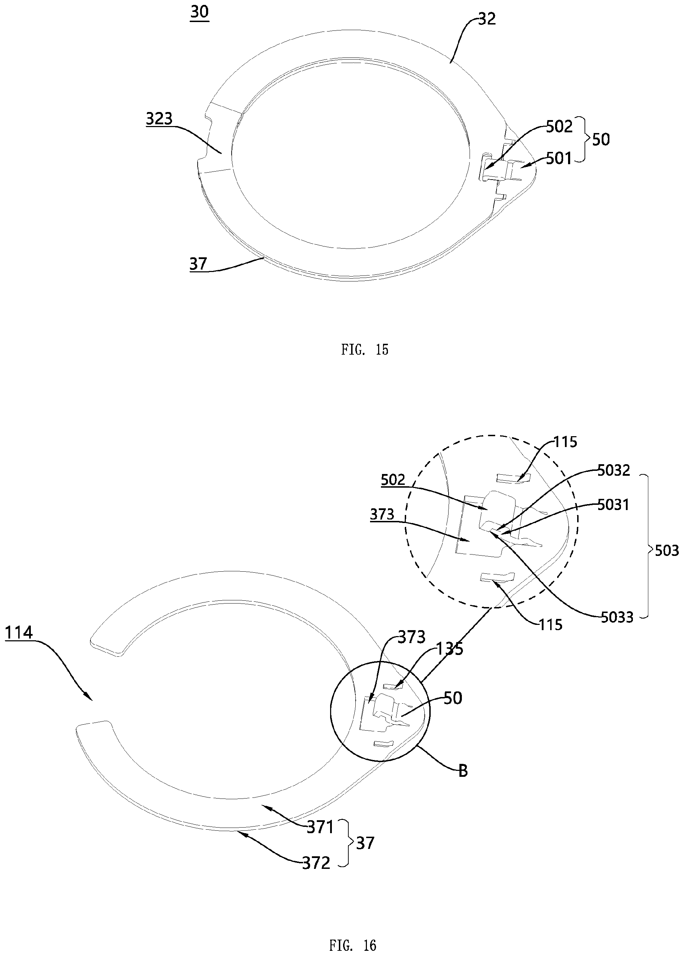

As shown in FIGS. 15 to 18, the protective case 100 includes an annular fixing member 37, a first buckle 50 and a metal ring-shaped support member 32. The fixing member 37 has a first ring inner wall, a first ring outer wall, a first surface 371 located between the first ring inner wall and the first ring outer wall, and a second surface 372 opposite to the first surface 371. The first buckle 50 has a fixed end 501 and a free end 502 opposite to each other. The fixed end 501 is connected to the fixing member 37. The free end 502 is located on one side of the fixed end 501 close to the ring inner wall of the fixing member 37 and can be elastically pivoted around the fixed end 501 to close to or away from the first surface 371. The free end 502 defines a first clamping slot 503. The support member 32 is stacked on the first surface 371 of the fixing member 37, and one end of the support member 32 is pivotably connected to the fixing member 37.

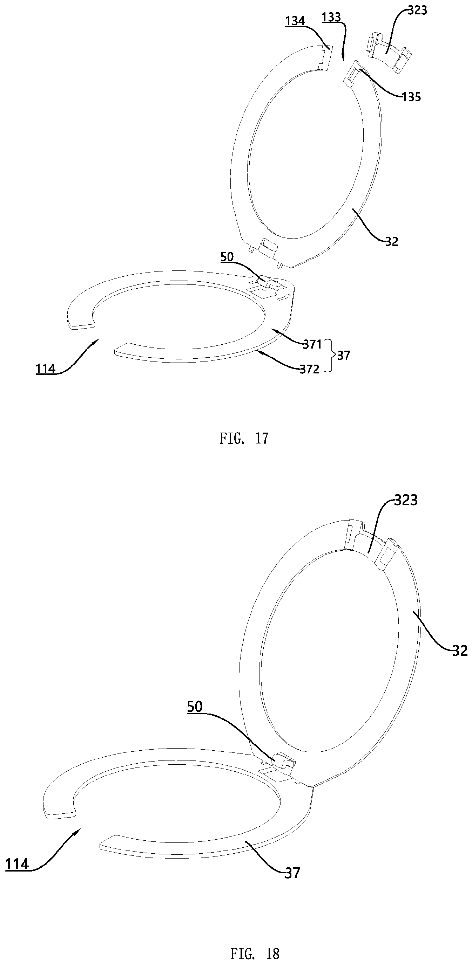

For example, FIG. 15 illustrates the state where the magnetic support assembly 30 is closed. The support member 32 and the fixing member 37 basically overlap. Referring to FIG. 17 which illustrates the state where the magnetic support assembly 30 is open, the support member 32 is rotated about the fixing member 37 to be at an angle with respect to the fixing member 37 for supporting the electronic device. The support member 32 has a second ring inner wall and a second ring outer wall. Referring to FIG. 18 which is an exploded view of FIG. 17, the support member 32 is provided with a first opening 133 that communicates the second ring inner wall with the second ring outer wall. Specifically, the support member 32 is, for example, engaged in the first clamping slot 503 and can rotate relative to the first clamping slot 503 to thereby achieve rotation relative to the fixing member 37 close to or away from the first surface 371. The first opening 133 is, for example, located on the side of the support member 32 away from the first buckle 50.

Of course, the above rotational connection through the first buckle 50 is just an example of one embodiment of the present invention. The rotational connection between the support member 32 and the fixing member 37 can also be achieved through a shaft/pin connection, etc. This embodiment is not limited here. For example, the fixing member 37 and the support member 32 have a circular ring-shaped sheet structure as a whole. The fixing member 37 may not be a circular ring but may be a ring of other shapes. The size of the ring of the support member 32 may be adapted to the Magsafe magnetic ring on the market. The support member 32 is, for example, an iron ring or other metal ring that can be magnetically attracted, so that the magnetic support assembly 30 can be adapted to the Magsafe magnetic car mount or Magsafe wireless charging, and has a better magnetic attraction effect. Moreover, the first opening 133 is provided on the support member 32 so that the support member 32 does not form a complete metal ring, which can reduce heat generation and improve the charging effect when used with a magnetic wireless charger.

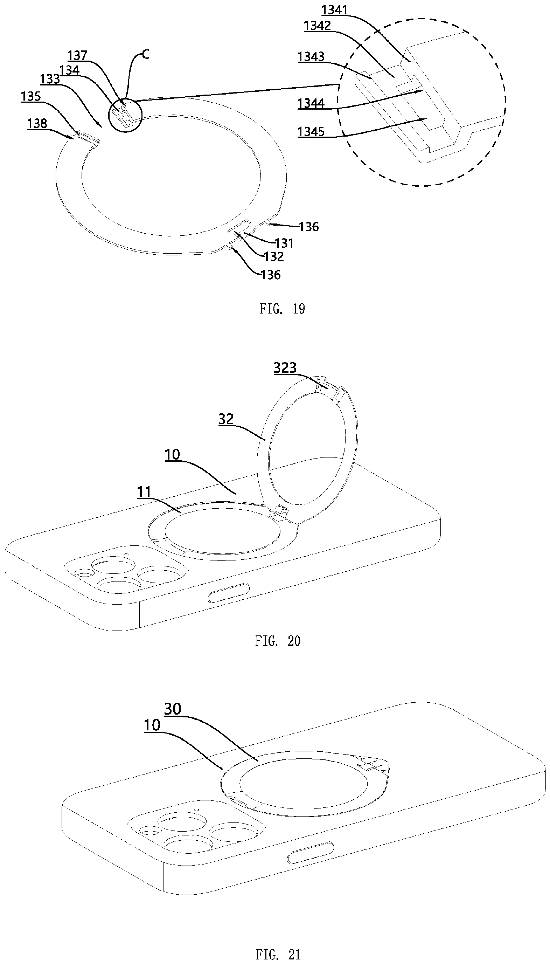

In one embodiment, as shown in FIGS. 17 and 18, the magnetic support assembly 30 as an example, further includes an insulating part 323 disposed in the first opening 133, which not only ensures the charging effect, but also ensures the aesthetics and stability of the support of the electronic device. The fixing member 37 can adopt metal iron rings or non-metallic materials. When the fixing member 37 is made of magnetically attractable metal materials such as iron rings, if the back of the electronic device itself is provided with magnetic members, the fixing member 37 can be directly attached to the electronic device without using adhesive arranged therebetween. The magnetic support assembly 30 can be removed at any time when it is not needed, and it is easy to operate. Similarly, referring to FIGS. 18 and 19, when the fixing member 37 is made of metal, the fixing member 37 has a second opening 114 corresponding to the first opening 133 in position, which facilitates to improve the charging effect. The first buckle 50 may be made of metal elastic sheets or other materials with elastic deformation properties. The first buckle 50 and the fixing member 37 may be integrally formed.

Figure 15 is a schematic structural diagram of the magnetic support assembly 30 in a closed state. FIG. 17 is a schematic structural diagram of the magnetic support assembly 30 in an open state. Referring to FIGS. 15 and 17, when using the magnetic support assembly 30, the second surface 372 of the fixing member 37 can be adhered to the back of the electronic device or the back of the protective case. In the closed state, the support member 32 is stacked on the first surface of the fixing member 37 and substantially coincides with the fixing member 37. At this time, the free end 502 of the first buckle 50 grasps the support member 32 so that the support member 32 can be maintained in a state of being attached to the fixing member 37 when no external force is exerted. When it is needed to open the magnetic support assembly 30, the end of the support member 32 away from the first buckle 50 is lifted, so that the support member 32 is rotated in a direction away from the first surface 371. At this time, the first buckle 50 is elastically deformed and the free end 502 is tilted as the support member 32 rotates (i.e., the free end 502 rotating around the fixed end 501 in a direction away from the first surface 371). When the support member 32 is rotated to a suitable angle with respect to the fixing member 37, the supporting effect can be achieved. When it is needed to close the magnetic support assembly 30, the support member 32 is rotated in a direction close to the first surface 371 until it contacts the fixing member 37. At this time, the first buckle 50 returns to its initial state, and the support member 32 is fastened to the fixing member 37.

The magnetic support assembly 30 of this embodiment adopts a shaftless rotation structure. The first buckle realizes the rotational connection between the fixing member 37 and the support member 32. When the magnetic support assembly 30 is closed, the thickness of the entire magnetic support assembly 30 is approximately equal to the thickness of the two sheets of the fixing member 37 and the support member 32. The free end 502 of the first buckle 50 can be tilted when the magnetic support assembly 30 is opened, which can provide a space for the supporting part 32 to rotate and appropriate damping. Therefore, the magnetic support assembly 30 has a simple, light and thin structure. The support member 32 can also be adapted to application scenarios such as magnetic attraction stands and magnetic attraction wireless charging, realizing the multi-functional application of the magnetic support assembly 30 and making the operation easier.

More specifically, referring to FIGS. 16 to 19, the fixing member 37 is provided with a first engaging hole 373 extending through the first surface 371 and the second surface 372. The free end 502 is located in the first engaging hole 373, and the first clamping slot 503 includes a first side wall 5031, a first bottom wall 5032 and a second side wall 5033. The first side wall 5031 is connected to the fixed end 501 and extends toward the side of the fixing member 37 close to the support member 32. The first bottom wall 5032 is connected to an end of the first side wall 5031 away from the fixed end 501 and extends from the first side wall 5031 in a direction away from the fixed end 501. The second side wall 5033 is connected to an end of the first bottom wall 5032 away from the first side wall 5031 and extends in a direction toward the second surface 372. The support member 32 is provided with an engagement section 131 that is recessed toward the first engagement hole 373. A second engagement hole 132 is provided between the engagement section 131 and the second ring inner wall of the support member 32. The engaging section 131 is engaged between the first side wall 5031 and the second side wall 5033, and the second side wall 5033 extends through the second engaging hole 132.

Figure 16 is a schematic structural diagram of the fixing member 37 and a partial enlarged view of area B. It can be seen that the first engaging hole 373 is defined at a position located between the first ring inner wall and the first ring outer wall of the fixing member 37, and the free end 502 is at the first engaging hole 373. The first side wall 5031, the first bottom wall 5032 and the second side wall 5033 cooperatively form the first clamping slot 503 with the slot opening facing downward (i.e., oriented toward the side away from the support member 32).

FIG. 19 is a schematic structural diagram of the support member 32. It can be seen that the engaging section 131 is recessed downward, and the second engaging hole 132 is located between the engaging section 131 and the second ring inner wall. According to FIG. 14 and FIG. 15, the fixing member 37 and the support member 32 are assembled in such a way that the second side wall 5033 of the first clamping slot 503 passes through the second engaging hole 132 to cause the engaging section 131 to be fastened, by the first clamping slot 503, in the first engaging hole 373. When the support member 32 rotates toward the side away from the first surface 371, the engaging section 131 stands up, and the second engaging hole 132 is rotated accordingly to sleeve on the first bottom wall 5032. The width of the engaging section 131 in the radial direction of the support member 32 is, for example, greater than the width of the second side wall of the fixing member 37 from the first surface 371 to the second surface 372, and the width of the first bottom wall 5032 in the radial direction of the fixing ring is greater than or equal to the thickness of the engaging section 131 in the radial direction of the support member 32. Thus, when the support member 32 is opened, the support member 32 will bring the free end 502 of the first buckle 50 to a tilt-up state. The sunken depth of the engaging section 131 toward the first engaging hole 373 is less than or equal to the thickness of the fixing member 37. The thickness of the first bottom wall 5032 from the first surface 371 to the second surface 372 is less than or equal to the thickness of the support member 32. In this way, when the support member 32 is folded, the thickness of the entire magnetic support assembly 30 is substantially equal to the sum of the thicknesses of the fixing member 37 and the support member 32.

Further, referring to FIG. 19, the support member 32 further includes a first end 137 and a second end 138 respectively located at opposite sides of the first opening 133, and a second buckle 134 and a third buckle 135. The second buckle 134 is connected to the first end 137 and protrudes beyond the first end 137 in a direction toward the second opening 114. The third buckle 135 is connected to the second end 138 and protrudes beyond the second end 138 in a direction toward the second opening 114. The support member 32 can be engaged in the second opening 114 through the second buckle 134 and the third buckle 135 to thereby engage with the fixing member 37, which makes the support member 32 be fixed by the fixing member 37 in the closed state to prevent accidental opening.

Further, the magnetic support assembly 30 further includes an insulating part 323. The insulating part 323 includes a cover plate 323a and a protrusion 323b protruding toward the second opening 114. The cover plate 323a is disposed in the first opening 133. The protrusion 323b is respectively engaged with the second buckle 134 and the third buckle 135. For example, in one embodiment, the second buckle 134 and the third buckle 135 have the same structure and are arranged symmetrically. The second buckle 134 specifically includes a third side wall 1341, a second bottom wall 1342, and a fourth side wall 1343. The third side wall 1341 is connected to the first end 137 and extends in a direction toward the second opening 114. The second bottom wall 1342 is connected to a side of the third side wall 1341 away from the first end 137 and extends in a direction close to the second end 138. The fourth side wall 1343 is connected to a side of the second bottom wall 1342 away from the third side wall 1341 and extends in a direction away from the second opening 114.

The protrusion 323b specifically includes a first projection and a second projection. The first projection is fitted between the second buckle 134 and the third buckle 135, and the second projection is fitted between the third side wall 1341 and the fourth side wall 1343. For example, the third side wall 1341 has a third opening 1344, and the second side wall 1342 has a fourth opening 1345. The third opening 1344 and the fourth opening 1345 are in communication with each other. The protrusion 323b further includes a third projection 1423. The third projection 1423 is disposed on a side of the second projection away from the cover plate 323a and is fitted in the third opening 1344 and the fourth opening 1345.

The second buckle 134 has a groove shape cooperatively formed by the third side wall 1341, the second bottom wall 1342 and the fourth side wall 1343, with the opening of the groove facing upward (i.e., facing a direction away from the fixing member 37). The third opening 1344 and the fourth opening 1345 are communicated with each other to form an L-shaped hole. The structure of the third buckle 135 may refer to the description of the second buckle 134. For example, the protrusion 323b further includes a projection similar to the second projection for fitting with the groove of the third buckle 135. For example, the protrusion 323b further includes a protrusion similar to the third protrusion 1423 for fitting with the hole on the third buckle 135. The insulating part 323 is engaged with the second buckle 134 and the third buckle 135 on the support member 32, and the support member 32 is engaged with the second buckle 134 and the third buckle 135. The structure is stable and beautiful. For example, the cover plate 323a is provided with a notch to facilitate opening the support member 32.

In one embodiment, the fixing member 37 is provided with a limiting slot 115 adjacent to the end that is rotationally connected to the support member 32 (i.e., the end adjacent to the first buckle 50). The limiting slot 115 extends through the first surface 371 and the second surface 372. The support member 32 is provided with a limiting member 136 protruding from the second ring outer wall, and the limiting member 136 is inserted into the limiting slot 115. Referring to FIGS. 17 and 18, two elongated limiting slots 115 are provided on opposite sides of the first buckle 50 respectively. When the support member 32 is attached to the fixing member 37, the limiting member 136 is inserted horizontally into the limiting slot 115. However, when the support member 32 is opened, the limiting member 136 is obliquely inserted into the limiting slot 115. When the support member 32 is opened to a certain angle, one end of the limiting member 136 away from the second ring inner wall abuts against the wall of the limiting slot 115 to limit the opening angle of the support member 32, which further improves the stability of the magnetic support assembly 30.

### Embodiment 4

Compared with Embodiment 1, the difference of this embodiment is that the magnetic support assembly 30 has a ring structure and includes a first magnetic member, a second magnetic member and a movable member.

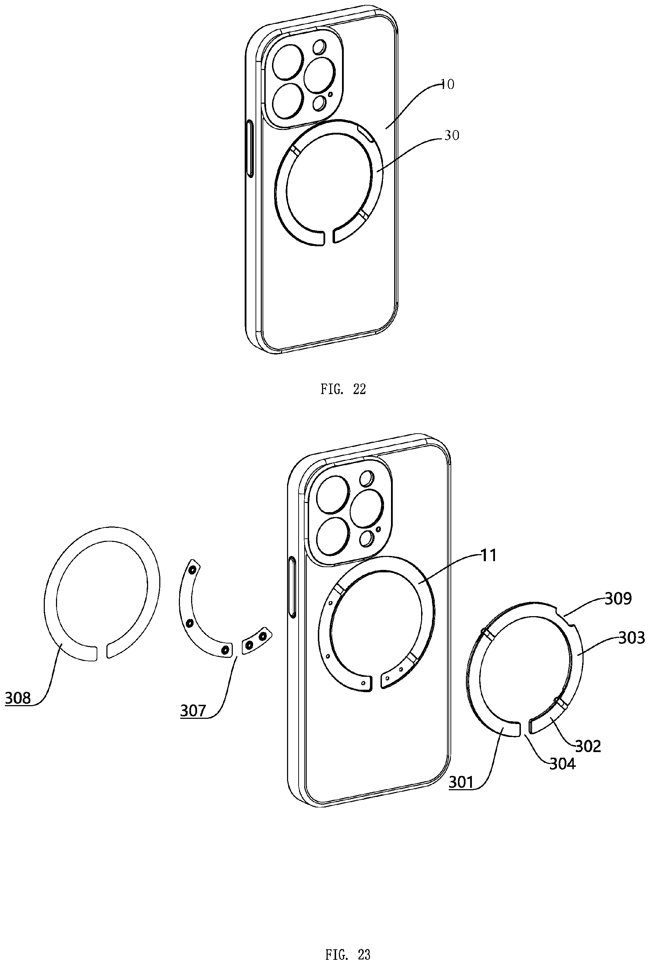

As shown in Figure 22, the protective case 100 includes a back plate 10 and a magnetic support assembly 30 connected to the back plate 10. The magnetic support assembly 30 is disposed on the outer side of the back plate 10 (the side opposite from the electronic device). The magnetic support assembly 30 includes a folded state and a support state. In the folded state, the electronic device can be laid flat, and in the support state, the electronic device can be tilted at a certain angle. The user can switch the state of the magnetic support assembly 30 according to actual needs, such as switching to the folded state when charging, switching to the support state when the user watches videos, etc.

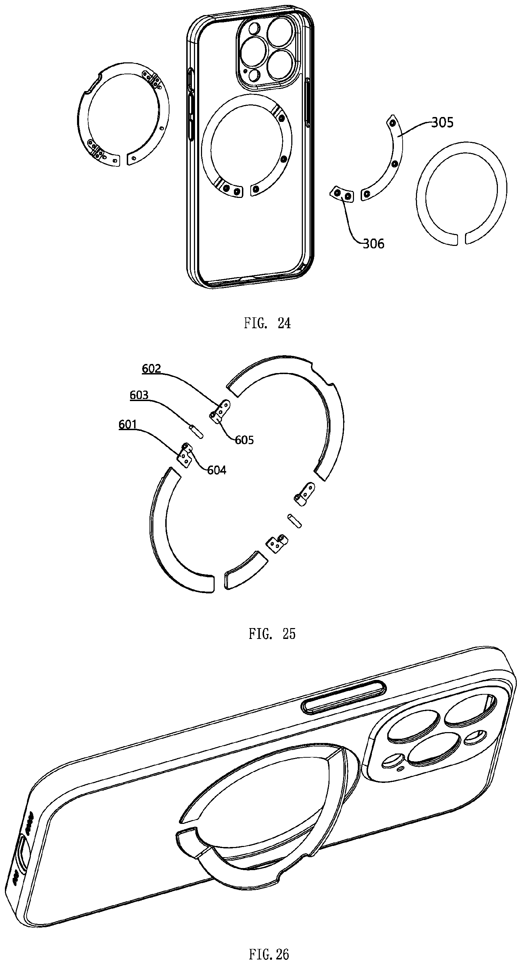

Referring to Figure 23 and Figure 24 together, the magnetic support assembly 30 has a ring structure. The magnetic support assembly 30 includes a first magnetic member 301, a second magnetic member 302 and a movable member 303. The first magnetic member 301 and the second magnetic member 302 are fixedly connected to the back plate 10. The movable member 303 is rotatably connected to the first magnetic member 301 and the second magnetic member 302 so that the magnetic support assembly 30 is capable of switching states by rotation of the movable part 303. In this embodiment, an annular receiving slot 11 is formed on the outer side of the back plate 10, and the first magnetic member 301 and the second magnetic member 302 are fixedly arranged in the receiving slot 11. When the magnetic support assembly 30 is switched to the folded state, the movable member 303 is flipped inward to be received in the receiving slot 11. When the magnetic support assembly 30 is switched to the support state, the movable member 303 is flipped outward to extend out of the receiving slot 11.

Preferably, the first magnetic member 301, the second magnetic member 302 and the movable member 303 are arc-shaped and are located on a common circle ring. The inner diameter of the circle ring is preferably 40 to 56 mm, which corresponds to wireless charging modules of electronic devices and wireless charging mount in position, shape, size, etc. The first magnetic member 301, the second magnetic member 302 and the movable member 303 are preferably magnetically attractable sheets, such as iron sheets or magnet sheets, to enhance the magnetic attraction effect with the wireless charging mount, which can prevent the electronic device from slipping off the wireless charging mount when charging, but also can improve the precise positioning of the electronic device and the charging mount to ensure the charging effect.

Preferably, the movable member 303 is roughly of a half-circle ring. When turned outward, the semicircular space surrounded by the movable member 303 can allow the user's fingers to insert therethrough, so that when the magnetic support assembly 30 is switched to the folded state, the protective case 100 of the electronic device of the present invention can be easily held by hands. The first magnetic member 301 and the second magnetic member 302 together form another half-circle ring. A first gap 304 is formed between the first magnetic member 301 and the second magnetic member 302 so that the first magnetic member 301, the second magnetic member 302 and the movable member 303 cooperatively form a non-closed circle ring structure as a whole to avoid blocking the magnetic field and affecting the wireless charging effect.

In the illustrated embodiment, a first connector 305 and a second connector 306 are provided on the inner side of the back plate 10 (the side facing the electronic device). The first connector 305 and the second connector 306 are sheet-like structure. The first connector 305 is riveted to the first magnetic member 301 through rivets, the second connector 306 is riveted to the second magnetic member 302 through rivets, and the back plate 10 defines corresponding through holes for the rivets passing therethrough. A second gap 307 is formed between the first connector 305 and the second connector 306, and the second gap 307 is aligned with the first gap 304.

It should be understood that the first connector 305 and the second connector 306 and the first magnetic member 301 and the second magnetic member 302 can also be disposed on the same side of the back plate 10. Through the first connector 305 and the second connector 306, the back plate 10 of different materials can be closely and firmly assembled with the first magnetic member 301 and the second magnetic member 302. In addition, the first magnetic member 301 and the second magnetic member 302 can also be connected to the back plate 10 in other ways, such as being integrally embedded in the back plate 10 through injection molding, being fixed in the receiving slot 11 of the back plate 10 through interference fit, and so on.

Preferably, the first connector 305 and the second connector 306 are covered with a decorative member 308. The decorative member 308 is a ring structure, and a notch 470 is formed at a position corresponding to the second gap 307. The decorative piece 308 can be made of metal, plastic, wood, ceramics, etc., which has a decorative effect but does not affect wireless charging. Preferably, the inner side of the back plate 10 is recessed to a certain depth to accommodate the first connector 305, the second connector 306 and the decorative member 308, so that the outer surface of the decorative member 308 is flush with the inner side of the back plate 10, thereby improving the appearance of the back plate 10 and reducing the overall thickness of the back plate 10.

Preferably, the first magnetic member 301, the second magnetic member 302 and the movable component 303 have the same thickness, and the outer surfaces of the three are coplanar in the folded state, so that the outer surface of the entire magnetic support assembly 30 becomes a flat surface and can fit on the charging mount. Preferably, in the folded state, the outer surfaces of the first magnetic member 301, the second magnetic member 302 and the movable member 303 are not lower than the outer surface of the back plate 10, and are coplanar with the outer surface of the back plate 10 as shown in the figure. When in use, the outer surfaces of the magnetic support assembly 30 and the back plate 10 both are attached to and contact the charging mount to enhance the magnetic attraction effect.

In the illustrated embodiment, opposite ends of the movable member 303 are respectively connected to the outer ends of the first magnetic member 301 and the second magnetic member 302 through a damping kit 60, thereby forming a damping fit so that when the movable member 303 is flipped outward to a predetermined angle, it can be automatically maintained at that angle.

As shown in Figure 25, the damping kit 60 includes a first damping member 601, a second damping member 602, and a rotating shaft 603 that connects the first damping member 601 and the second damping member 602 in series. One side of the first damping member 601 is riveted and connected to the first magnetic member 301 or the second magnetic member 302, and the other side is rolled to form the first pivot hole 604. One side of the second damping member 602 is riveted and connected to the movable member 303, and the other side is rolled to form the second pivot hole 604. Opposite two ends of the rotating shaft 603 are respectively inserted into the first pivot hole 604 and the second pivot hole 605 and are damped and matched with them. After rotation, the movable member 303 can be automatically fixed by friction and will not rotate by itself without external force.

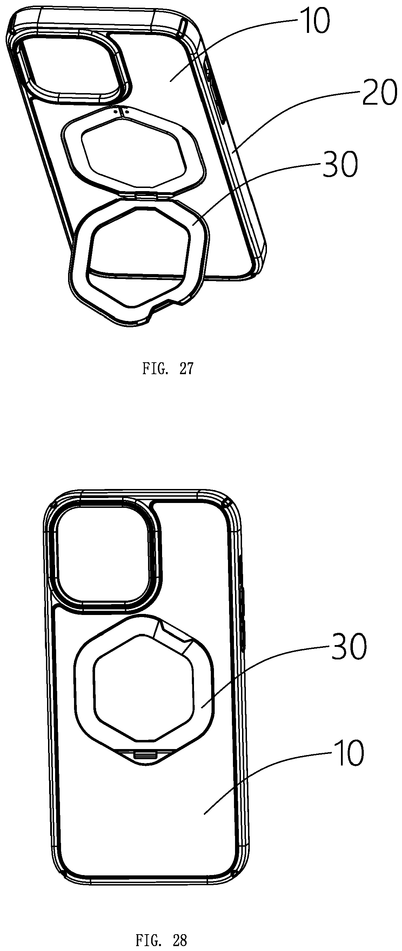

In the folded state, as shown in FIG. 26, the movable member 303 is embedded in the receiving slot 11 of the back plate 10. The entire protective case 100 can be placed flatly on the charging mount for charging, placed on a support such as a desktop, carried by being placed in a bag or a pocket, or hold it in a hand. In the support state, as shown in FIG. 28, the movable member 303 is flipped to extend out of the receiving slot 11 to form a triangular support with the back plate 10, which can be used as a bracket to keep the electronic device in a tilted state to facilitate the user to watch videos.

Preferably, the middle of the outer surface of the movable member 303 is recessed to form a gripping position 309 which facilitates the user to lift the movable member 303 and flip it outward to switch the magnetic support assembly 30 to the support state. Preferably, the rotating shaft 603 is inclined with respect to the side edge of the back plate 10, and is inclined at approximately 45 degrees as shown in the Figure. In this way, after the movable member 303 is flipped outward, its rotation axis forms a certain angle with respect to the side edge of the electronic device. Gently pressing the edge of the electronic device will not cause the movable member 303 to rotate, thereby improving the stability of the support.

### Embodiment 5

Compared with Embodiment 1, the difference of this embodiment is that the magnetic support assembly 30 has a polygonal structure.

As shown in FIGS. 27 and 28, the magnetic support assembly 30 has a polygonal structure. In this embodiment, the magnetic support assembly has a regular hexagonal structure.

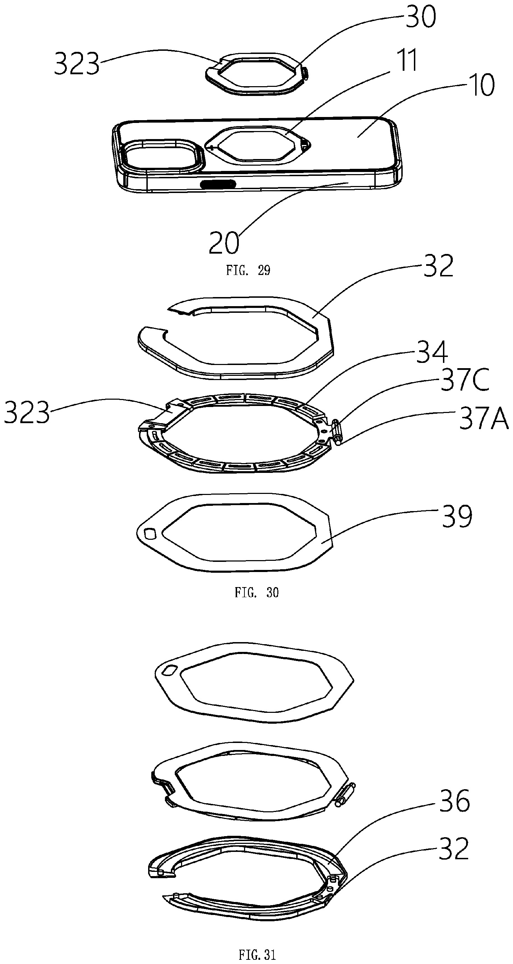

Referring further to FIGS. 29 to 31, in this embodiment, the support member 32 has a regular hexagonal structure, and the magnetic member 34 includes a plurality of magnetic parts which are spaced and arranged into two arc shapes. Two ends of the two arc shapes are spaced apart so that the two arc shapes cooperatively form a rough ring shape. It can be seen that the shape change of the support member 32 does not affect the shape of the magnetic member 34. The support member 32 with a polygonal shape can provide a more stable support effect during supporting.

### Embodiment 6

Compared with Embodiment 1, the difference of this embodiment is that the first fixing element 37B also has a polygonal structure.

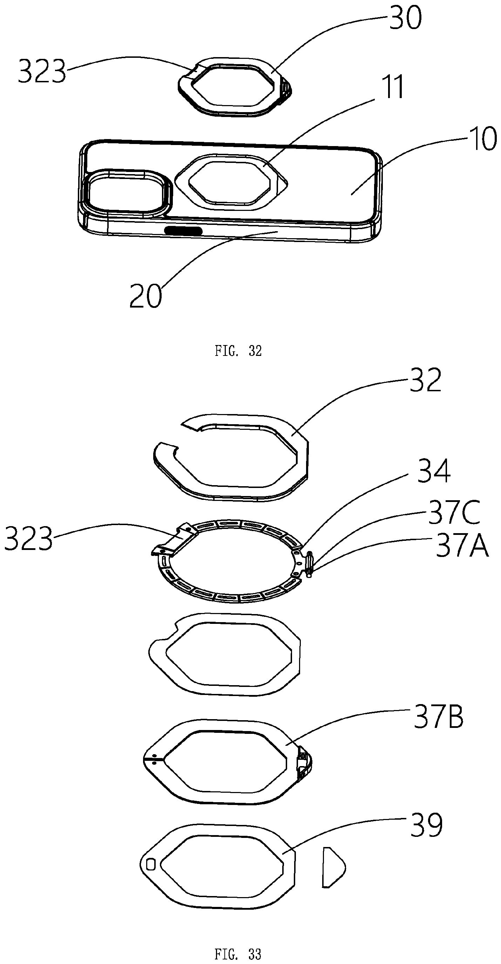

As shown in FIGS. 32 and 33, in this embodiment, the first fixing element 37B has also a regular hexagonal structure. When the magnetic support assembly 30 is in the stowed state, the supporting part 32 is stacked on the first fixing element 37B. Providing the first fixing element 37B to have the same shape and structure as the support member 32 can make the connection between the magnetic support assembly 30 and the back plate 10 more stable.

### Embodiment 7

Compared with Embodiment 1, the difference of this embodiment is that a locking member 31 and a locking slot 323C are added so that the magnetic support assembly 30 can self-lock when in the stowed state.

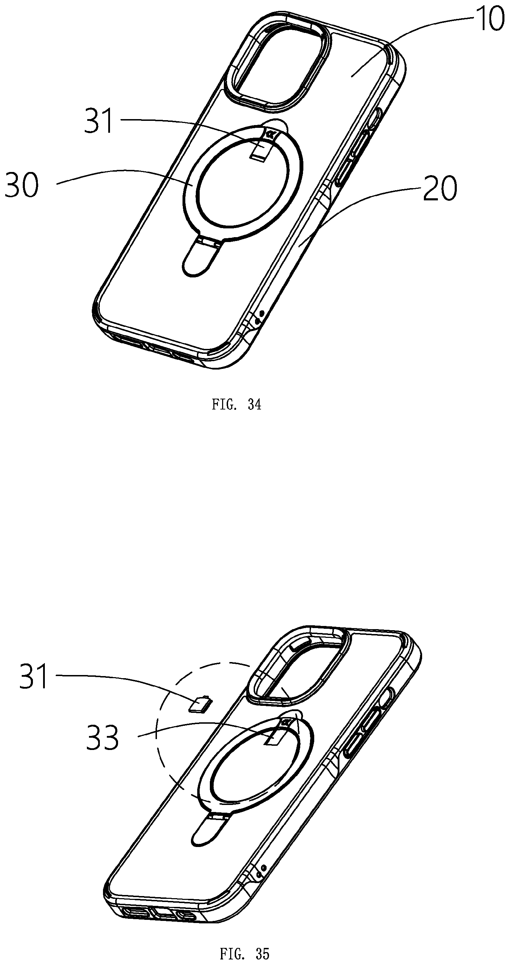

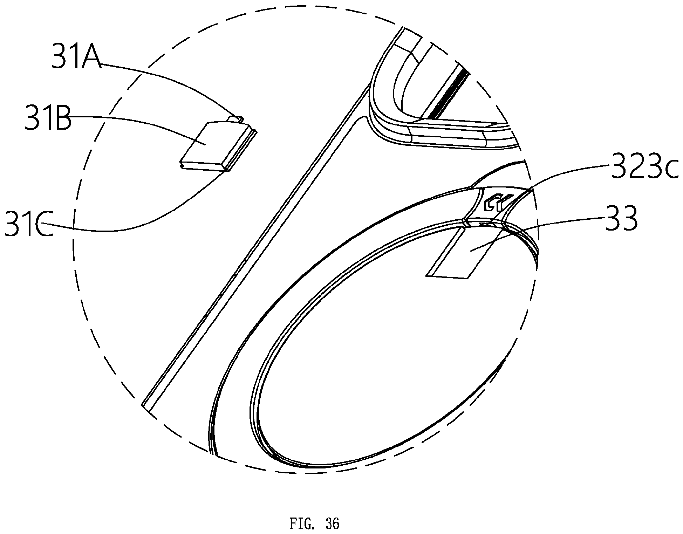

As shown in FIGS. 34-36, the locking member 31 is provided on the back plate, and the locking slot 323C is provided in the magnetic support assembly 30. Wherein the back plate is provided with a slide groove 33, and the locking member 32 can slide in the slide groove 33 to engage into or disengage from the locking slot 323C. The locking member 31 includes a main body part 31B, sliding parts 31C located on opposite sides of the main body part 31B and a protruding portion 31A located at one end of the main body. The sliding portion 31C are configured for slidably connecting with the slide groove 33. When the main body 31B slides toward the magnetic support assembly 30, the protruding portion 31A can be inserted into the locking slot 323C to lock the magnetic support assembly 30, so that the magnetic support assembly 30 cannot rotate relative to the back plate 10. When it is needed to open the magnetic support assembly 30, the main body 31B is slid away from the magnetic support assembly 30, and the protruding portion 31A will disengage from the locking slot 323C, and the lock will be released. Adding a function of self-locking can prevent the magnetic support assembly 30 from being accidentally opened when it is not needed to be opened, and the user experience is better.

### Embodiment 8

Compared with Embodiment 1, the difference of this embodiment is that the magnetic support assembly 30 and the back plate 10 are not rotatably connected with each other.

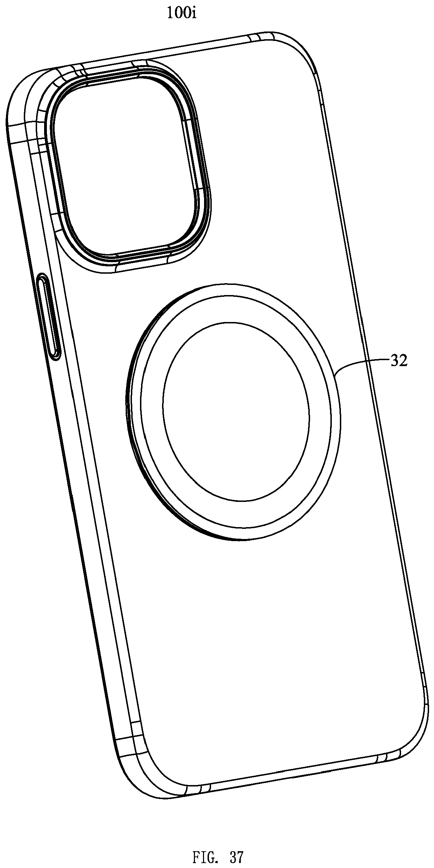

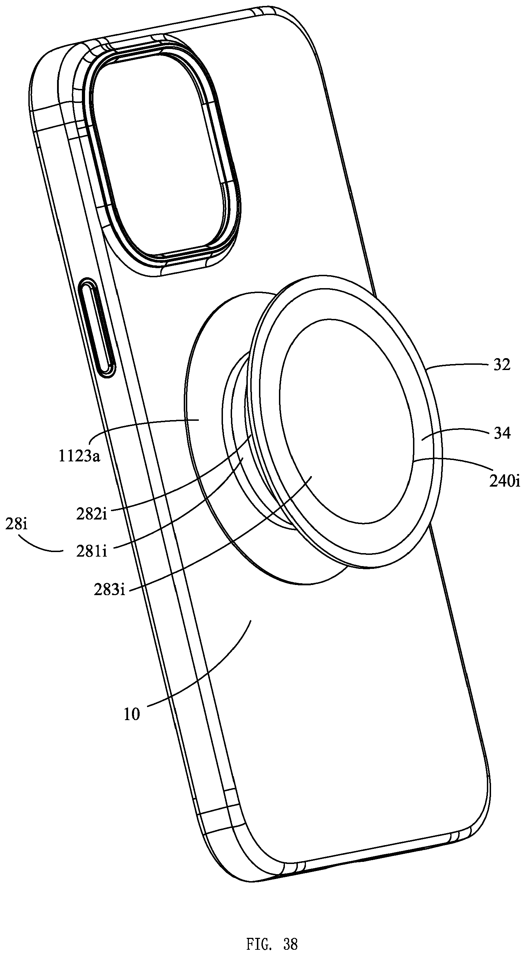

As shown in FIGS. 37 and 38, the connecting member 28i is fixedly or detachably connected to the back plate 10. At least a part of the connecting member 28i is made of a flexible material, such as rubber, flexible plastic, silicone, etc., and the connecting member 28i can telescope relative to the back plate 10. The magnetic member 34 is connected to the connecting member 28i, and the magnetic member 34 can move away from or toward the back plate through the connecting member 28a.

The connecting member 28i is accommodated in the accommodation space 1123a. The connection member 28i includes a first connection part 281i fixedly or detachably connected to the bottom wall of the accommodation space 1123a, a second connection part 282i connected to the first connection part 281i, and a third connection part 283i connected to the second connection part 282i. The size of the first connection part 281i and the third connection part 283i is larger than the size of the second connection part 282i. The second connection part 282i is made of a flexible material, and the connecting member 28i can be in an extended state or a retracted state. The first connection part 281i and the third connection part 283i may be made of a flexible material.

The support member 32 is sleeved around the magnetic member 34, and the magnetic member 34 is sleeved around the third connection part 283i. When the second connection portion 282i is extended, the magnetic member 34 moves accordingly, thereby supporting the protective case. When the second connection portion 282i is retracted, the connection member 28i may be at least partially accommodated in the accommodation space 1123a, and the magnetic member 34 may be at least partially accommodated in the accommodation space 1123a or arranged outside the accommodation space 1123a.

The concepts described herein may be embodied in other forms without departing from their spirit and nature. The disclosed specific embodiments are to be considered illustrative rather than restrictive. Therefore, the scope of the present application is to be determined by the appended claims rather than by the preceding description. Any changes within the literal meaning and equivalent scope of the claims shall fall within the scope of these claims.

## Claims

1. A protective case with a magnetically attractive support, **characterized by** comprising:
a back plate;
a side frame connected with the back plate to form a receiving chamber for receiving an electronic device; and
a magnetic support assembly connected with the back plate or the side frame and being capable of moving relative to the back plate or the side frame so as to support the protective case.

2. The protective case according to claim 1, **characterized in that** the back plate includes a first region, a middle region and a second region arranged sequentially along a length direction of the back plate, the magnetic support assembly includes a stowed state, and the magnetic support assembly is located in the middle area when the magnetic support assembly is in the stowed state.

3. The protective case according to claim 2, **characterized in that** the magnetic support assembly further includes a support state, and when the magnetic support assembly is in the support state and the back plate is used as a projection surface, the orthographic projection of the magnetic support assembly is located in the first region or the middle region or the third region.

4. The protective case with a magnetically attractive support according to any one of claims 1 to 3, **characterized in that** the magnetic support assembly is made of a material that can be attracted by a magnet.

5. The protective case with a magnetically attractive support according to any one of claims 1 to 3, **characterized in that** the magnetic support assembly includes a support member and a magnetic member which are fixedly or detachably connected to each other.

6. The protective case with a magnetically attractive support according to claim 5, **characterized in that** when the electronic device is located in the receiving chamber, the magnetic member is substantially aligned with a magnetic part of the electronic device.

7. The protective case with a magnetically attractive support according to claim 5, **characterized in that** the support member is ring-shaped, a receiving portion is provided on the support member, and the magnetic member is ring-shaped or arc-shaped and is disposed in the receiving portion.

8. The protective case with a magnetically attractive support according to claim 7, **characterized in that** the support member includes a non-insulating part and an insulating part, the non-insulating part is ring-shaped and includes a ring section and an opening section, and the insulating part is arranged at the opening section and two ends of the insulating part are respectively connected to the ring section.

9. The protective case with a magnetically attractive support according to claim 8, **characterized in that** the insulating part is provided with a gripping position.

10. The protective case with a magnetically attractive support according to claim 8, **characterized in that** the surface of the insulating part is flush with the surface of the ring section.

11. The protective case with a magnetically attractive support according to claim 5, **characterized in that** the thickness of the magnetic member is 0.3 mm to 4 mm; and/or the thickness of the magnetic support assembly is 1 mm to 5 mm.

12. The protective case with a magnetically attractive support according to claim 7, **characterized in that** the inner diameter of the magnetic member is 40 mm to 52 mm; and/or the inner diameter of the support member is 38 mm to 50 mm.

13. The magnetic stent protective case according to claim 7, **characterized in that** the outer diameter of the magnetic member is 48 mm to 60 mm; and/or the outer diameter of the support member is 50 mm to 62 mm.

14. The protective case with a magnetically attractive support according to claim 7, **characterized in that** the magnetic support assembly forms a surrounded magnetic coupling area, wherein the distance between the center of the magnetic coupling area and the top edge of the back plate is 77 mm to 97 mm; and/or the distance between the center of the magnetic coupling area and the side edge of the back plate is 40 mm to 52 mm.

15. The protective case with a magnetically attractive support according to claim 7, **characterized in that** at least a part of the magnetic support assembly can rotate relative to the back plate to form an angle with respect to the back plate, and the angle is in a range of 0∼135°.

16. The protective case with a magnetically attractive support according to claim 7, **characterized in that** the magnetic member includes a plurality of magnetic parts which are spaced arranged to form a ring or arc shape.

17. The magnetic support protective case according to claim 7, **characterized in that** the magnetic support assembly further includes a fixing element that is fixedly connected to the back plate or the side frame, and the magnetic support assembly is rotatably connected to the fixing element.

18. The protective case with a magnetically attractive support according to claim 17, **characterized in that** the back plate is provided with a receiving groove, the fixing member is disposed in the receiving groove, and when the magnetic support assembly is in a stowed state, the support member and the magnetic member are both located in the receiving groove.

19. The protective case with a magnetically attractive support according to claim 18, **characterized in that** when the magnetic support assembly is in the stowed state, the surface of the magnetic support assembly is flush with the back plate.

20. The protective case with a magnetically attractive support according to claim 19, **characterized in that** one of the magnetic support assembly and the back plate includes at least one locking member, and the other of the magnetic support assembly and the back plate includes at least one locking slot, and when the magnetic support assembly is in the stowed state, the at least one locking member is locked in the at least one locking slot.

21. The protective case with a magnetically attractive support according to claim 17, **characterized in that** the magnetic support assembly further includes an operating part, the operating part is in communication with the receiving groove, and the operating part is configured to facilitate pulling the magnetic support assembly upwards.

22. The protective case with a magnetically attractive support according to claim 17, **characterized in that** the fixing member includes a rotating element and a first fixing element, the first fixing element is fixedly connected to the back plate or the side frame, the support member is rotatably connected to the first fixing member through the rotating element so that the support member can rotate relative to the back plate or the side frame, and the first fixing element is located on inside of the back plate or the side frame.

23. The protective case with a magnetically attractive support according to claim 22, **characterized in that** the fixing member further includes a second fixing element, the second fixing element is fixedly connected to the support member, and the first fixing element passes is rotatably connected to the second fixing element via the rotating element, and the second fixing element is located outside of the back plate or the side frame.

24. The protective case with a magnetically attractive support according to claim 17, **characterized in that** the fixing member and the insulating part are located at opposite ends of the ring section.

25. The protective case with a magnetically attractive support according to claim 17, **characterized in that** the fixing member includes a first fixing element, a rotating element and a second fixing element, and the first fixing element is connected to the third fixing element through the rotating element, the first fixing rotating element is located inside the back plate and is fixedly or detachably connected to the back plate; the second fixing rotating element is located outside the back plate and is fixedly connected or detachably connected to the support member.

26. The protective case with a magnetically attractive support according to claim 7, **characterized in that** the magnetic member is provided with an opening for disconnecting the annular magnetic member.

27. The protective case with a magnetically attractive support according to claim 26, **characterized in that** the magnetic member includes a plurality of magnetic components each of which is arc-shaped, and the plurality of magnetic components are arranged in a ring shape, and two of the magnetic components are spaced apart to form the opening.

28. The protective case with a magnetically attractive support according to claim 26, **characterized in that** the magnetic components include a plurality of magnetic components each of which is arc-shaped, and the plurality of magnetic components are spaced arranged to form an annular shape, and the opening is formed between any two adjacent magnetic components.

29. The protective case with a magnetically attractive support according to claim 4, **characterized in that** the magnetic support assembly is ring-shaped and is provided with an opening for disconnecting the ring-shaped magnetic support member.

30. The protective case with a magnetically attractive support according to claim 29, **characterized in that** the magnetic support assembly includes a metal support ring which can rotate relative to the back plate or the side frame to support the protective case, and the opening includes a first opening which is located in the metal support ring.

31. The protective case with a magnetically attractive support according to claim 29, **characterized in that** the magnetic support assembly further includes a fixing ring, the fixing ring is fixedly connected to the back plate, and one end of the metal support ring is rotatably connected to the fixing ring, and the opening further includes a second opening located in the fixing ring.

32. The protective case with a magnetically attractive support according to claim 31, **characterized in that** when the magnetic support assembly is in the stowed state, the metal support ring is stacked on the fixing ring, and the first opening and the second opening are aligned with each other or offset from each other.

33. The protective case with a magnetically attractive support according to claim 31, **characterized in that** the magnetic support assembly further includes a non-metallic fastener, the non-metallic fastener is disposed at the first opening and two ends of the non-metallic fastener are respectively connected to the metal support ring.

34. The protective case with a magnetically attractive support according to claim 31, **characterized in that** the fixing ring is provided with a buckle, the buckle includes a fixed end and a free end opposite to each other, the fixed end is fixed to the fixing ring, and the free end can rotate relative to the fixed end;
a clamping slot is provided on the free end, and the metal support ring is engaged with the clamping slot and can rotate relative to the clamping slot.

35. The protective case with a magnetically attractive support according to claim 4, **characterized in that** the magnetic support assembly has a ring structure, and the magnetic support assembly includes a first magnetic member, a second magnetic member and a movable member, the first magnetic member and the second magnetic member are respectively fixedly connected to the back plate, one end of the first magnetic member and one end of the second magnetic member are spaced apart, and two ends of the movable member are rotatably connected to the other end of the first magnetic member and the other end of the second magnetic member respectively.

36. The protective case with a magnetically attractive support according to claim 35, **characterized in that** the first magnetic member, the second magnetic member and the movable member are all arc-shaped and located on a common circular ring.

37. The protective case with a magnetically attractive support according to claim 36, **characterized in that** the inner diameter of the circular ring where the first magnetic member, the second magnetic member and the movable member are located is 40 to 56 mm.

38. The protective case with a magnetically attractive support according to claim 37, **characterized in that** when the magnetic support assembly is in the stowed state, surfaces of the movable member, the first magnetic member and the second magnetic member are flush.

39. The protective case with a magnetically attractive support according to claim 38, **characterized in that** an annular receiving groove is provided on the back plate, the first magnetic member and the second magnetic member are fixed in the annular receiving groove, and when the magnetic support assembly is in the stowed state, the movable member is received in the annular receiving groove.

40. The protective case with a magnetically attractive support according to claim 35, **characterized in that** the outer edge of the movable member is recessed to form a gripping position.

41. The protective case with a magnetically attractive support according to claim 35, **characterized in that** the movable member is rotatably connected to the first magnetic member and the second magnetic member respectively through a rotating shaft, and the axis of the rotating shaft is inclined relative to the side frame.

42. The protective case with a magnetically attractive support according to claim 41, **characterized in that** the magnetic support assembly further includes: two damping members, and two ends of the movable member are connected to the first and second magnetic members in a damping manner through the two damping members so as to maintain the rotation angle of the movable member relative to the back plate.

43. The protective case with a magnetically attractive support according to claim 1, **characterized in that** the outer periphery of magnetic support assembly is polygonal.
